# EUROPÄISCHE PATENTSCHRIFT

(11) **EP 1 506 124 B1**
(45) Veröffentlichungstag und Bekanntmachung des Hinweises auf die Patenterteilung: **22.03.2006**
(21) Anmeldenummer: 03704452.6
(22) Anmeldetag: 23.01.2003
(51) Int. Cl.: B65D 90/14, B60P 1/64

(54) **Stützbein für Wechselbehälter-Fahrzeug**
Supporting leg for interchangeable container of a vehicle
Béquille pour conteneur interchangeable de véhicule

(30) Priorität: 23.05.2002 DE 20208084 U
(43) Veröffentlichungstag der Anmeldung: 16.02.2005
(73) Patentinhaber: Hamburger Patent Schmiede GmbH, 21079 Hamburg (DE)
(72) Erfinder: METTERNICH, Heinz-Rüdiger, 21079 Hamburg (DE)
(74) Vertreter: Glaeser, Joachim
(86) Internationale Anmeldenummer: PCT/EP2003/000643
(87) Internationale Veröffentlichungsnummer: WO 2003/099684

(56) Entgegenhaltungen:
- EP-A- 0 024 996
- DE-A- 4 214 267
- DE-A- 19 607 945

## Beschreibung

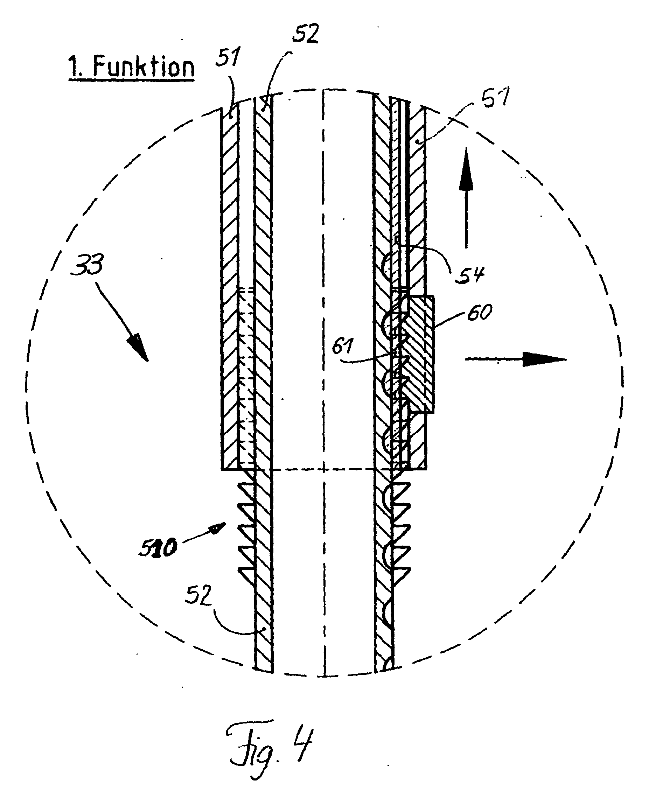

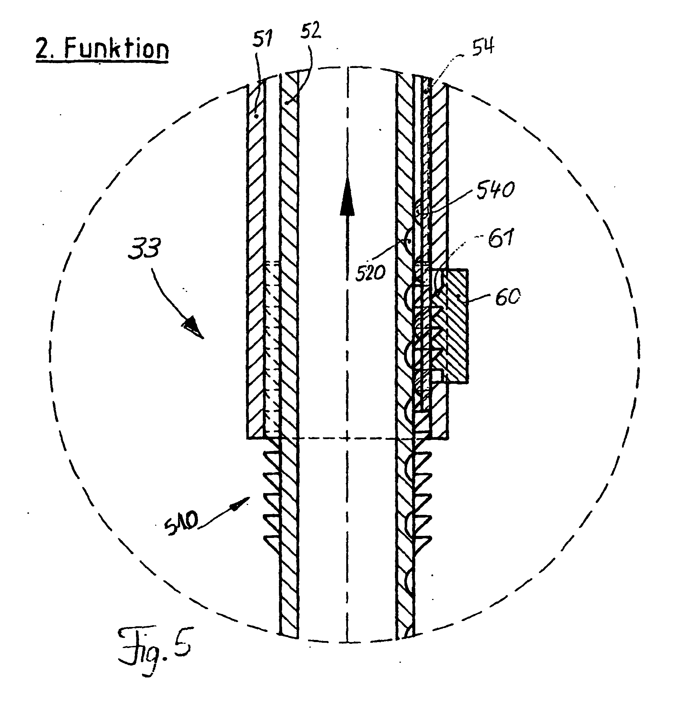

Die Erfindung bezieht sich auf ein Stützbein für ein Wechselbehälter-Fahrzeug zum Abstellen des Wechselbehälters auf einer horizontalen Unterlage, aufweisend zwei teleskopierende Rohre und einen Druckluftantrieb für das Ein- und Ausfahren des einen Rohres, wobei am inneren ausfahrbaren Rohr gewindeartige oder ringförmige Tragteile mit horizontaler Auflagefläche ausgebildet sind, und am äußeren Rohr ein mit den Tragteilen zusammenwirkender Eingriffsteil mit horizontalen Auflageflächen angeordnet ist, der aus einer Außereingriffslage (Fig. 5) heraus in eine Eingriffslage (Fig. 4) federnd vorgespannt ist und an dem äußeren Rohr kraftschlüssig befestigt ist.

Ein solches Stützbein ist bekannt (EP 0 024 996A) und kann nur durch bestimmte Handgriffe ein- und ausgefahren werden.

Wechselbehälter werden üblicherweise von Lastwagen bzw. deren Anhängern transportiert. Hierbei wird so vorgegangen, dass der Lastwagen den Wechselbehälter zusammen mit der Last aufnimmt und an den gewünschten Ort transportiert. Dort wird der Wechselbehälter abgestellt und das Fahrzeug kann weitere Lasten aufnehmen. Für den Zeitraum des Abstellens ist es erforderlich, dass der Wechselbehälter über Stützbeine die entstehende Belastung durch den Container und das entsprechende Gut auf die Stellfläche abgibt. Üblicherweise verfügen Wechselbehälter über vier Stützbeine, wobei Konstruktionen mit um horizontale Achsen verschwenkbaren Stützbeinen bekannt sind (DE 196 07 945 A1).

Bei der vorliegenden Erfindung geht es darum, diesen Schwenkvorgang bzw. Ausfahrvorgang des Stützbeins des Wechselbehälters selbsttätig durchzuführen, d.h. derart zu gestalten, dass der Fahrer des Fahrzeugs für den Abstellvorgang jedenfalls nicht seine Fahrerkabine verlassen muss.

Erreicht wird dies dadurch, dass bei einem Stützbein der eingangs genannten Art das innere ausfahrbare Rohr über einen Klotz und einen Stab mit einer Kolbenstange des Druckluftantriebs verbunden ist; dass im äußeren Bereich des Rohres eine halbkugelförmige Ausnehmung zur Aufnahme eines halbkugelförmigen Vorsprungs an dem Stab vorgesehen ist, und dass der Stab und der Eingriffsteil aus ihren Eingriffslagen heraus eine Relativbewegung zwischen den Rohren zulassend verschoben werden, wenn der Vorsprung aus der Ausnehmung bei Einwärts- bzw. Aufwärtsbewegung der Kolbenstange herausgelangt.

Die Erfindung wird nachstehend anhand der Zeichnungen beispielsweise erläutert.
- Figur 1: zeigt eine Vorderansicht eines ausgefahrenen Stützbeins, welche auf einer Unterlage aufruht.
- Figur 2: zeigt Einzelheiten im oberen Bereich des Stützbeins in der ersten Funktion.
- Figur 3: zeigt diesen oberen Bereich des Stützbeins während der zweiten Funktion.
- Figur 4: zeigt den unteren Bereich des Stützbeins in der ersten Funktion.
- Figur 5: zeigt den unteren Bereich des Stützbeins in der zweiten Funktion.

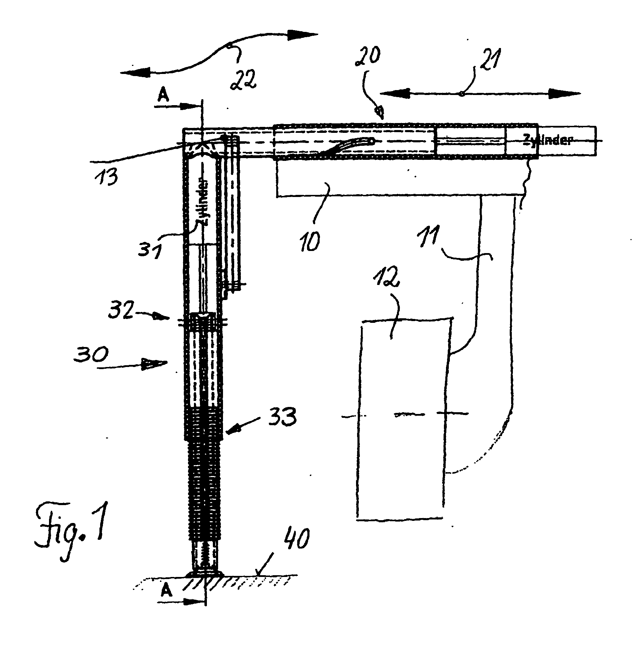

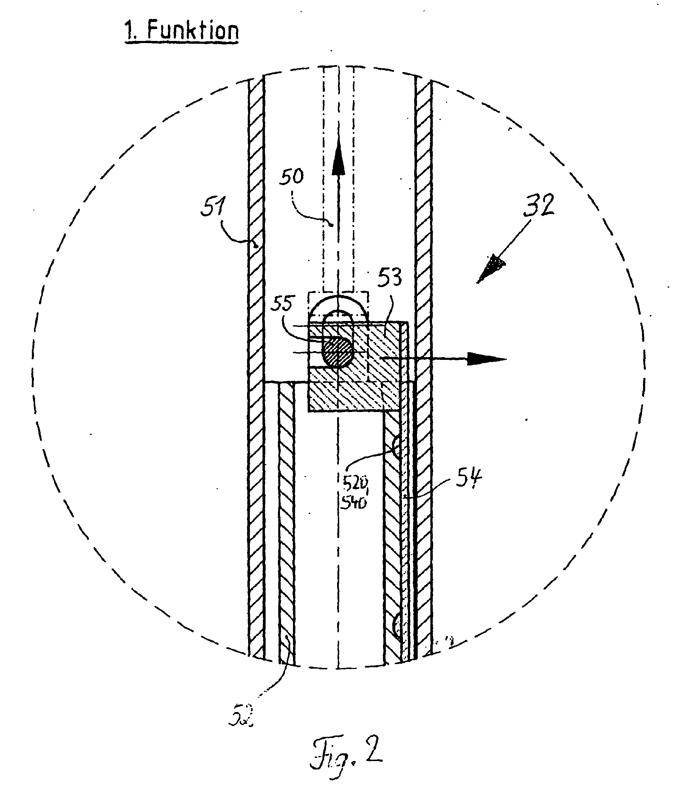

In Figur 1 ist ein Stützbein schematisch dargestellt, so wie es auf einer Unterlage 40 aufruht. Das Stützbein kann über einen Arbeitsmittelzylinder 31 ein- und ausgefahren werden. Der Bereich 32 zeigt die Verbindung der Kolbenstange des Zylinders 31 mit dem ausfahrbaren Rohr 52 des Stützbeins. Der Bereich 33 zeigt die kraftschlüssige Verbindung des äußeren Rohrs 51 mit einem Eingriffsteil 60. In Figur 1 sind diese Teile schematisch wiedergegeben, sie werden anhand der Beschreibung der Figuren 2 bis 4 mit Einzelheiten erläutert.

Das Stützbein 30 ist um eine horizontale Achse verschwenkbar, und zwar über einen weiteren Arbeitsmittelzylinder 20, der über eine über den Umfangsteil eines Rohrs verlaufende Spur durch Ein- und Ausfahren der Kolbenstange eine Schwenkbewegung erzeugt. Die Ein- und Ausfahrrichtung dieses Arbeitsmittelzylinders ist mit den Doppelpfeilen 21 gezeigt, während die daraus resultierende Schwenkbewegung durch 22 versinnbildlicht wird.

Das Schwenkbein 30 bzw. sein Antrieb 20 ist auf einem Chassis 10 eines nicht gezeigten Fahrzeugs befestigt. Ebenfalls am Chassis ist eine Radhalterung 11 für ein Rad 12 gezeigt. In der gezeigten Lage ruht der Wechselbehälter bzw. das Chassis und alle weiteren erwähnten Teile über das Stützbein 30 auf dem Boden 40, so dass das Rad 12 Abstand zum Boden hat.

Die Figuren 2 bis 4 sind entsprechend der Schnittlinie A-A durchgeführt worden.

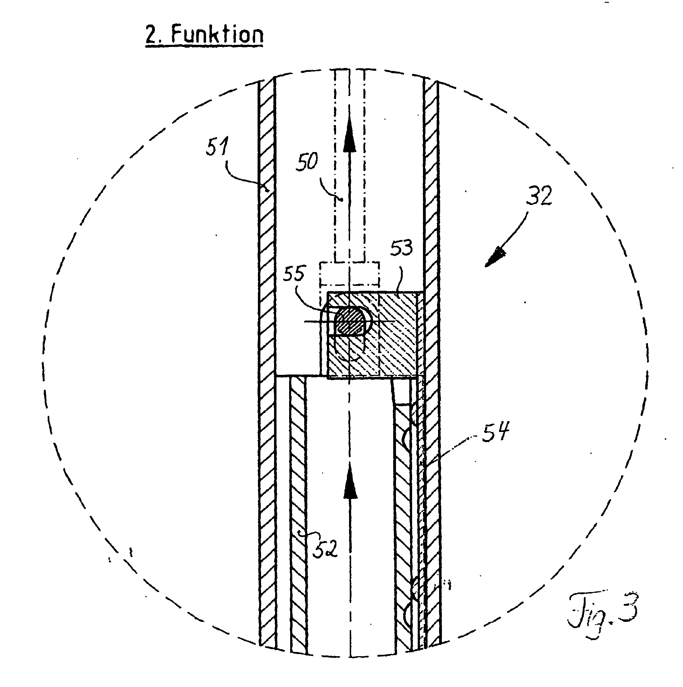

Figur 2 zeigt das äußere teleskopierende Rohr 51 und die darin befindliche Kolbenstange 50. Am Ende der Kolbenstange befindet sich ein quer verlaufender Stift 55, der in einem Langloch untergebracht ist. Der Stift kann in diesem Langloch zwei Extremlagen annehmen, in Figur 2 ist die untere Lage gezeigt, in Figur 3 die obere Lage.

Der Stift selbst ist in einer quer verlaufenden Ausnehmung eines Klotzes 53 angeordnet, der über einen stabförmigen Teil 54 nach unten hin verlängert ist.

Aus Figur 2 ist zu erkennen, dass die Kolbenstange 50 nicht direkt mit dem inneren ausfahrbaren Rohr 52 verbunden ist, sondern über den Klotz 53 bzw. den Stab 54. In Figur 2 ist eine Ausnehmung in Form einer Kugel im äußeren Bereich des Rohrs 52 zu erkennen, in dem sich ein halbkugelförmiger Vorsprung 540 befindet, der an der Stange 54 ausgebildet ist. Die Wirkungsweise dieser Teile wird unter Bezugnahme auf die weiteren Figuren erläutert.

Die Figur 2 zeigt die erste Funktion der Teile und lässt erkennen, dass durch eine Aufwärtsbewegung der Kolbenstange 50 auch eine Aufwärtsbewegung des inneren Rohrs 52 stattfindet.

Figur 3 zeigt die Funktion, bei welcher die Teile 520 und 540 außer Eingriff sind und wo der Klotz 53 eine Lage eingenommen hat, die in Bezug auf die Lage in Figur 2 weiter rechts angeordnet ist.

Die Figuren 4 und 5 zeigen die unteren Teile des Stützbeins und hierzu ist folgendes zu sagen.

Das ausfahrbare Rohr 52 ist mit einer Mehrzahl von ringartigen Tragteilen 510 ausgebildet. Diese haben eine nach oben gewandte horizontale Fläche und einen von da ausgehenden schrägen Verlauf. Bei Blickrichtung der Figur 4 ist eine sägezahnartige Ausbildung zu erkennen.

Eine entsprechend sägezahnartige Ausbildung ist an dem Eingriffsteil 60 zu erkennen, die Vorsprünge sind jedoch entgegengerichtete und mit 61 bezeichnet. In Figur 4 ist zu erkennen, dass die Vorsprünge 61 mit den Tragteilen 510 zusammenwirken, so dass eine Kraftübertragung vom Rohr 52 über den Eingriffsteil 60 zum äußeren Rohr 51 möglich ist, d.h., dass in dieser Lage der Wechselbehälter auf dem Fundament aufgestellt werden kann und die Belastung entsprechend weitergegeben wird.

Figur 5 zeigt die Lage, bei welcher die Teile 540 aus einer Ausnehmung 520 am inneren Rohr 52 herausgelangt sind. Dadurch wird die Stange 54 nach rechts verschoben und damit auch der Eingriffsteil 60. In dieser Lage kann eine Relativbewegung zwischen den Teleskoprohren 51 und 52 stattfinden.

Der Eingriffsteil 60 befindet sich in einer Art Fenster des äußeren Rohrs 51 und kann die gewünschten Einwärts- und Auswärtsbewegungen ausführen. Nicht gezeigt ist eine Federvorspannung, die dafür sorgt, dass der Eingriffsteil 60 in die Eingriffslage gehen wird.

## Patentansprüche

1. Stützbein für Wechselbehälter-Fahrzeug zum Abstellen des Wechselbehälters auf einer horizontalen Unterlage, aufweisend zwei teleskopierende Rohre und einen Druckluftantrieb für das Ein- und Ausfahren des einen Rohres, wobei am inneren ausfahrbaren Rohr (52) gewindeartige oder ringförmige Tragteile (510) mit horizontaler Auflagefläche ausgebildet sind, und am äußeren Rohr (51) ein mit den Tragteilen (510) zusammenwirkender Eingriffsteil (60) mit horizontalen Auflageflächen angeordnet ist, der aus einer Außereingriffslage heraus in eine Eingriffslage federnd vorgespannt ist und an dem äußeren Rohr (51) kraftschlüssig befestigt ist, **dadurch gekennzeichnet, dass**
das innere ausfahrbare Rohr (52) über einen Klotz (53) und einen Stab (54) mit einer Kolbenstange (50) des Druckluftantriebs (31) verbunden ist;
dass im äußeren Bereich des Rohres (52) eine halbkugelförmige Ausnehmung (520) zur Aufnahme eines halbkugelförmigen Vorsprungs (540) an dem Stab (54) vorgesehen ist, und dass
der Stab (54) und der Eingriffsteil (60) aus ihren Eingriffslagen heraus eine Relativbewegung zwischen den Rohren (51, 52) zulassend verschoben werden, wenn der Vorsprung (540) aus der Ausnehmung (520) bei Einwärts- bzw. Aufwärtsbewegung der Kolbenstange (50) herausgelangt.

## Claims

1. Supporting leg for a swap body vehicle to set down the swap body on a horizontal base, comprising two telescoping pipes and a pneumatic drive for retracting and extending one of the tubes, wherein thread-like or annular support portions (510) comprising a horizontal bearing surface are formed on the inner extensible pipe (52), and an engaging part (60) co-operating with the support portions (510) is arranged with horizontal bearing surfaces on the outer pipe (51), which part is elastically biased from a non-engaged position towards its engaged position and is fixed frictionally on the outer pipe (51), **characterised in that**
the inner extensible pipe (52) is connected through a block (53) and a bar (54) with a piston rod (50) of the pneumatic drive (31);
that in the outside area of the pipe (52) a hemispherical recess (520) is provided for reception of a hemispherical projection (540) on the bar (54), and that
the bar (54) and the engaging part (60) are displaced out of their the engaging positions, allowing a relative movement between the tubes (51, 52), when the projection (540) is removed from the recess (520) with inward or upward movement of the piston rod (50), respectively.

## Revendications

1. Béquille pour conteneur interchangeable de véhicule, destinée à déposer le conteneur interchangeable sur une surface horizontale, qui comporte deux tubes télescopiques et un entraînement par air comprimé pour faire entrer et sortir l'un des deux tubes, sur le tube intérieur mobile (52) étant prévues des parties de support à filetage ou des parties de support annulaires (510) avec une surface d'appui horizontale, et, sur le tube extérieur (51) étant disposé un élément d'engrènement (60) avec des surfaces d'appui horizontales, qui coopère avec les parties de support (510), qui est mis sous précontrainte élastique à partir d'une position désengrenée dans une position d'engrènement et est fixé par adhérence sur le tube extérieur (51), **caractérisé en ce que**
- le tube intérieur mobile (52) est relié, par un tasseau (53) et une barre (54), à une tige de piston (50) de l'entraînement par air comprimé,
- dans la zone extérieure du tube (52) est prévu un évidement hémisphérique (520) destiné à recevoir une saillie hémisphérique (540) prévue sur la barre (54),
- la barre (54) et l'élément d'engrènement (60) sont dégagés de leur position d'engrènement en tolérant un mouvement relatif entre les tubes (51, 52), lorsque la saillie (540) sort de l'évidement (520) à l'occasion du mouvement d'engagement, respectivement du mouvement montant de la tige de piston.
